Europäisches Patentamt

(19) European Patent Office    (11) Publication number:    **0 113 375**

Office européen des brevets    **B1**

(12)    **EUROPEAN PATENT SPECIFICATION**

(45) Date of publication of patent specification: **09.09.87**    (51) Int. Cl.⁴: **F 16 H 1/32**

(21) Application number: **82901859.7**

(22) Date of filing: **18.06.82**

(86) International application number:
**PCT/JP82/00236**

(87) International publication number:
**WO 84/00056 05.01.84 Gazette 84/01**

(54) REDUCTION GEAR.

(43) Date of publication of application:
**18.07.84 Bulletin 84/29**

(45) Publication of the grant of the patent:
**09.09.87 Bulletin 87/37**

(84) Designated Contracting States:
**DE FR GB**

(56) References cited:
**JP-Y-45 029 928**
**JP-Y-47 014 502**
**US-A-2 959 065**

**Soviet Inventions Illustrated week D12, 29
April 1981, section Q64**

(73) Proprietor: **Matsushita Electric Industrial Co.,
Ltd.
1006, Oaza Kadoma
Kadoma-shi Osaka-fu, 571 (JP)**

(72) Inventor: **INOUE, Toshitsugu
5-19, 4-chome Matsuigaoka Tanabe-cho
Tsuzuki-gun Kyoto-fu 610-03 (JP)**
Inventor: **ISHIHARA, Hiromasa
9-32, Kikugaoka-cho Hirakata-shi
Osaka-fu 573 (JP)**
Inventor: **MORIMOTO, Masato
4-16, 1-chome Okayama Shijyonawate-shi
Osaka-fu 575 (JP)**

(74) Representative: **Spencer, Graham Easdale et al
A.A. Thornton & CO Northumberland House
303-306, High Holborn
London WC1V 7LE (GB)**

## Description

### Technical Field

The present invention relates to a reduction gear for use in various types of automatic machine and has as its objective providing a reduction gear which permits manufacture or assembly without demanding high working accuracy of the parts and which may have slight backlash arising from meshing of teeth.

### Background Art

Of late, reduction gears which work by taking advantage of the difference in the number of teeth have been put into practical use. The principles involved in such a reduction gear are explained below with reference to Figures 1 to 4 of the accompanying drawings in which:

Figure 1 is a transverse section through a reduction gear;

Figure 2 is an axial sectional view of a conventional reduction gear;

Figure 3 is a side view of part of the flex spline of the reduction gear of Figure 2; and

Figure 4 is a side view of part of the circular spline of the gear of Figure 2.

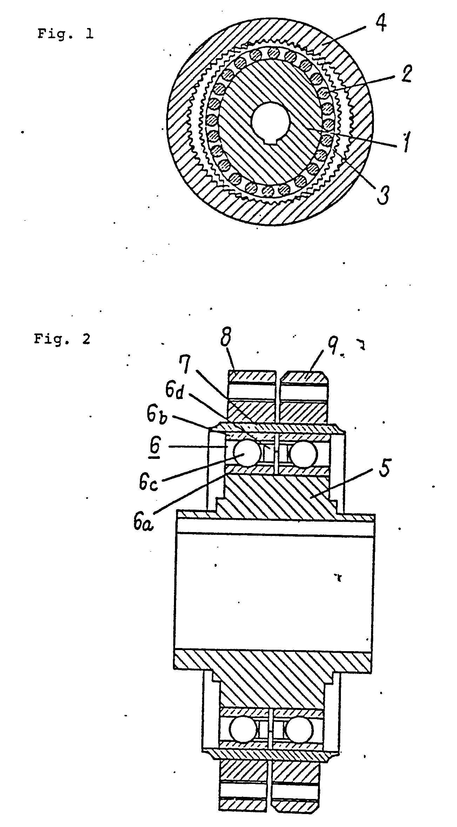

Referring to Figure 1, arranged on the periphery of a wave generator 1 is a roller group 2. A flex spline 3 is arranged in the form of a ring circumscribing this roller group 2. The flex spline 3 has teeth ($Z_1$ in number) formed on the outer circumference thereof. The flex spline 3 meshes with the teeth ($Z_2$ in number) provided on the inside of an outermost circular spline 4. The relation between $Z_1$ and $Z_2$ is $Z_1 < Z_2$ or $Z_1 > Z_2$, with the difference between the numbers of teeth $Z_1$ and $Z_2$ being an even number. The outside circumference of the flex spline 3 and the inside circumference of the circular spline 4 mesh with each other at two diametrically opposite positions on their circumferences. As the wave generator 1 makes one revolution, the relative positions of the circular spline 4 and the flex spline 3 are shifted by an angle corresponding to that of a number of teeth equal to $(Z_2 - Z_1)/2$. A reduction gear of this form needs to have the flex spline 3 and the circular spline 4 formed in elliptical shapes, thus involving difficulties in the manufacturing process and in ensuring accuracy. Because of the difficulty of achieving the necessary accuracy during production of the parts, there is a need to select and match acceptable parts during assembly which leads to high manufacturing costs.

In order to make the principle more practically realizable, a bearing which is deformable in the radial direction is employed. Thus, in reduction gear of Figures 2 to 4, a wave generator 5 has on its outside circumference a bearing 6 which is so arranged that its inner diameter presses lightly in against the wave generator 5. This bearing 6 consists of inner ring 6a, outer ring 6b, balls 6c and retainer 6d, and the bearing 6 is deformable in the radial direction. On the outside circumference of the bearing 6 there is arranged a flex spline 7 on the outside circumference of which are formed teeth, $Z_1$ in number. (Although only one bearing is mentioned it will be seen from the drawing that two axially adjacent bearings may be used.) On the outside circumference of the flex spline 7, circular splines 8 and 9 are located and the internal teeth ($Z_2$ in number) of the circular spline 8 and the internal teeth ($Z_3$ in number) of the circular spline 9 mesh with the teeth of the flex spline 7 at diametrically opposed positions. The relationships between the numbers of teeth $Z_1$, $Z_2$ and $Z_3$ are such that $Z_1 < Z_2$, $Z_1 = Z_3$ and the difference in the numbers of teeth $Z_1 - Z_2$ is an even number. In this reduction gear, an elliptical shape is obtainable by deforming the bearing 6; therefore, the problem of achieving high forming accuracy for the contacting surfaces of balls may be solved. However, no improvement is secured as regards the requirement that the teeth of the flex spline 7 should mesh with those of the circular splines 8 and 9 without any gap if backlash is to be averted. In manufacturing or assembling this reduction gear, it is necessary to eliminate any variations, in the axial direction, of the radial thickness of the bearing 6, and of the radial thickness between the internal surface of the flex spline 7 and its outer circumferential meshing pitch circle A, and to ensure perfect roundness of the meshing pitch circle B of the internal teeth of the circular splines 8 and 9.

Such requirements are virtually impossible to achieve in manufacture, however, and even if proper combinations have been worked out, dimensional errors cannot be compensated and as a consequence the parts may fit too tightly so that a problem of rotating the wave generator 5 can arise. Then if the dimensions of parts are determined with the dimensional tolerances taken into account in order to avoid this problem, backlash is inevitable, rendering the reduction gear unusable for precision devices such as industrial robots, etc.

A reduction gear of essentially the same kind as that shown in Figure 2, but with the wave generator located outermost and the circular splines innermost is described in US—A—2959065.

The present invention provides a reduction gear comprising a first circular spline having internal teeth with a truly circular pitch circle, a second circular spline arranged coaxially with and adjacent to the first circular spline and also having internal teeth with a truly circular pitch circle, the number of teeth of the first and second circular splines differing by an even number, a flex spline having external teeth which mesh partially with the internal teeth of each of the first and second circular splines at positions located symmetrically with respect to the central axis of rotation, the flex spline being deformable in the radial direction, a wave generator of substantially elliptical sectional shape arranged inside the flex spline and coaxially with the first and second circular splines, the wave generator being rotatable relative to the first and second circular splines, and a bearing having an inner ring, an outer ring and balls received between the rings, the bearing being interposed between the inner circumference of the flex spline and the outer circumference of the wave generator and being deformable in the radial direction, characterised in that an annular recess is defined around the inside of the bearing balls by the surface of the wave generator in contact with the inner ring of the bearing, and/or an annular recess is defined around the outside of the bearing balls by the teeth of the first and second circular splines.

The annular recess allows for partial deformation of the inner bearing ring and/or the flex spline to compensate for dimensional tolerances of the parts which would otherwise result in the parts fitting too tightly together, thereby enabling backlash to be eliminated and positive operation to be assured.

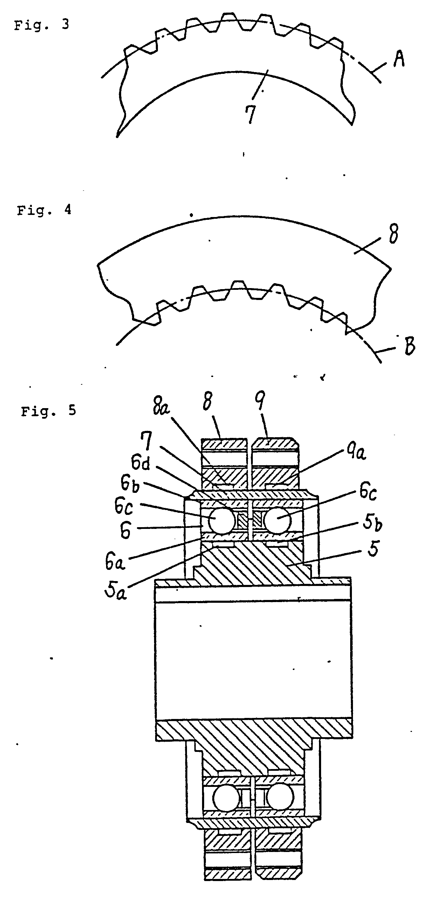

A detailed description of the invention will now be given with specific reference to Figures 5 to 7 of the accompanying drawings, in which:—

Figure 5 is a sectional view of a reduction gear embodying the invention;

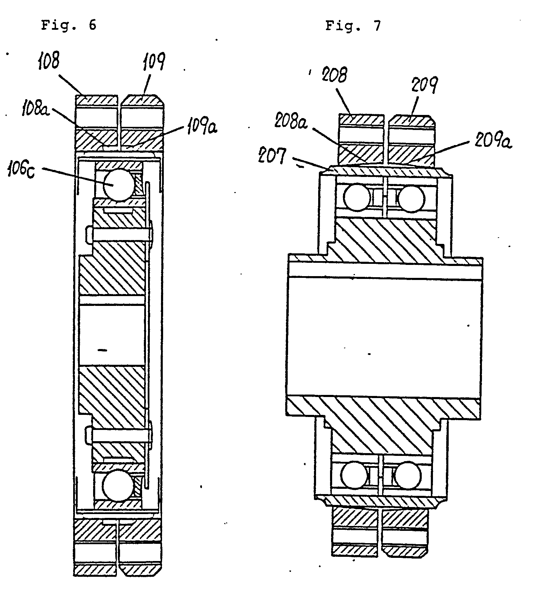

Figure 6 is a sectional view of another embodiment; and

Figure 7 is a sectional view of still another embodiment.

In describing the embodiments, detailed description of the component parts which are identified by the numerals 5—9 and which are similar to the corresponding parts of the conventional gear shown in Figure 2, is considered unnecessary and is omitted.

The embodiment of the invention shown in Figure 5 includes relieving recesses for absorbing dimensional errors, in the radial direction, are formed in parts facing and the inner ring 6a and the outer ring 6b of each deformable bearing 6. Thus 5a and 5b designate annular or ring shaped grooves provided in the outer circumference of the wave generator 5 which in contact with the inner ring 6a of the respective bearing 6, the grooves being located in axial alignment with and radially inside the balls 6c of the bearings. Similarly 8a and 9a designate annular or ringshaped grooves in the inner teeth of each of the circular splines 8 and 9 which mesh with the flex spline 7, and which ring shaped grooves located at positions radially outside the balls 6c.

Even if there are some variations, in the axial direction, in the radial thicknesses of the bearing 6 and the wave generator 5, or there are some variations in the out of roundness of the circular splines 8 and 9, these variations may be compensated by the grooves 5a, 5b, 8a and 9a. Accordingly, even with no clearance in the assembly of parts, the wave generator 5 will still turn, while firm-meshing is achieved between the circular splines 8 and 9 and the flex spline 7, whereby the need for meshing gaps between the pairs of teeth is eliminated so that the correct speed reduction will be obtained.

Figure 6 shows another embodiment of this invention, in which a single bearing 106 is used instead of two bearings as in Figure 5. On the circular splines 108 and 109, annular grooves 108a and 109a are formed at a position corresponding to balls 106c. A single annular groove is shown in the surface of the wave generator in axial alignment with the balls.

Figure 7 gives still another embodiment, in which differing from the previous embodiment of grooves formed in the inner circumferences of the circular splines at a position corresponding to the balls, annular recesses 208a and 209a are formed by internal teeth of the circular splines 208 and 209 tapering in the axial direction so that the pitch circle diameters of the circular splines 208 and 209 increase towards the sides which face each other.

In this embodiment also, any errors in the radial dimensions may be absorbed by the annular clearance or recess formed between the external teeth of the flex spline 207 and the internal teeth of the circular splines 208 and 209. Because the internal circumferences of the circular splines 208 and 209 are tapered, their mounting is easy when assembling the reduction gear. Moreover, in forming such parts, no separate process such as fluting is required; the working is possible merely by inclining the rotational central axis of the tool by a specified angle.

Industrial Applicability

As described in the foregoing, since one or more recesses for absorbing dimensional errors of the gear parts are formed on the outer circumference of the wave generator or on the inner circumference of the circular splines, even if respective parts fit closely together without clearance, the inner and the outer rings of the bearing with small thicknesses or the flex spline, when deformed, will be deflected into the aforementioned recesses, thereby making the compensations for any possible dimensional errors. On this ground, a reduction gear involving no backlash may be realized with a simple structure, which will exhibit outstanding enormous effects in practical applications.

List of Reference Code Numerals in the Drawings

5 ... Wave generator,
5a and 5b ... Notches,
6 ... Bearing,
6a ... Inner ring,
6b ... Outer ring,
6c ... Ball,
7 and 207 ... Flex spline,
8, 108 and 208 ... First circular spline,
9, 109 and 209 ... Second circular spline,
8a, 9a, 108a, 109a, 208a and 209a ... Notches.

**Claims**

1. A reduction gear comprising a first circular spline (8; 108; 208) having internal teeth with a truly circular pitch circle, a second circular spline (9; 109; 209) arranged coaxially with and adjacent to the first circular spline and also having internal teeth with a truly circular pitch circle, the number of teeth of the first and second circular splines differing by an even number, a flex spline (7) having external teeth which mesh partially with the internal teeth of each of the first and second circular splines at positions located symmetrically with respect to the central axis of rotation, the flex spline being deformable in the radial direction, a wave generator (5) of substantially elliptical sectional shape arranged inside the flex spline and coaxially with the first and second circular splines, the wave generator being rotatable relative to the first and second circular splines, and a bearing (6) having an inner ring (6a), an outer ring (6b) and balls (6c) received between the rings, the bearing being interposed between the inner circumference of the flex spline (7) and the outer circumference of the wave generator (5) and being deformable in the radial direction, characterized in that an annular recess (5a, 5b) is defined around the inside of the bearing balls (6c) by the surface of the wave generator (5) in contact with the inner ring (6a) of the bearing (6), and/or an annular recess (8a, 9a; 108a, 109a; 208a, 209a) is defined around the outside of the bearing balls (6c, 106c) by the teeth of the first and second circular splines (8, 9; 108, 109; 208, 209).

2. A reduction gear according to claim 1 characterized in that the surface of the wave generator (5) has a groove (5a, 5b) defining an annular recess, the groove having a width smaller than the width of the inner ring (6a) of the bearing.

3. A reduction gear according to claim 1 or 2, characterized in that a groove (8a, 9a; 108a, 109a) in the teeth of the first and second circular splines defines a recess around the outside of the bearing balls, the groove having a width smaller than that of the outer ring (6b) of the bearing.

4. A reduction gear according to claim 1, characterized in that an annular recess (208a, 209a) is defined around the outside of the bearing balls by the first and second circular splines (208, 209) having a tapered shape such that the diameter of the pitch circle of each circular spline increases in the direction toward the other circular spline.

**Patentansprüche**

1. Untersetzungsgetriebe, enthaltend einen ersten kreisförmigen Ring (8; 108; 208) mit Innenzähnen mit einem streng kreisförmigen Teilungskreis, einen zweiten kreisförmigen Ring (9; 109; 209), der koaxial zu und neben dem ersten kreisförmigen Ring angeordnet ist und ebenfalls Innenzähne mit streng kreisförmigem Teilungskreis hat, wobei die Anzahl der Zähne der ersten und zweiten kreisförmigen Ringe um eine gerade Zahl voneinander abweicht, einen Biegering (7), der Außenzähne aufweist, die teilweise mit den Innenzähnen sowohl des ersten als auch des zweiten kreisförmigen Ringes an Stellen kämmen, die symmetrisch in bezug auf die Drehmittenachse gelegen sind, wobei der Biegering in radialer Richtung verformbar ist, einen Wellengenerator (5) von im wesentlichen elliptischer Querschnittsgestalt, der innerhalb des Biegeringes und koaxial zu den ersten und zweiten kreisförmigen Ringen angeordnet ist, welcher Wellengenerator relativ zu den ersten und zweiten kreisförmigen Ringen drehbar ist, und ein Lager (6) mit einem inneren Ring (6a), einem äußeren Ring (6b) und Kugeln (6c), die zwischen den Ringen angeordnet sind, wobei das Lager zwischen dem inneren Umfang des Biegeringes (7) und dem äußeren Umfang des Wellengenerators (5) angeordnet und in radialer Richtung verformbar ist, dadurch gekennzeichnet, daß eine ringförmige Vertiefung (5a, 5b) um die Innenseite der Lagerkugeln (6c) durch die Oberfläche des Wellengenerators (5) in Berührung mit dem inneren Ring (6a) des Lagers (6) definiert ist und/oder eine ringförmige Vertiefung (8a, 9a; 108a, 109a; 208a, 209a) um die Außenseite der Lagerkugeln (6c, 106c) durch die Zähne der ersten und zweiten kreisförmigen Ringe (8, 9; 108, 109; 208, 209) definiert ist.

2. Untersetzungsgetriebe nach Anspruch 1, dadurch gekennzeichnet, daß die Oberfläche des Wellengenerators (5) eine Rille (5a, 5b) aufweist, die eine ringförmige Vertiefung definiert, wobei die Rille eine Breite hat, die kleiner als die Breite des inneren Rings (6a) des Lagers ist.

3. Untersetzungsgetriebe nach Anspruch 1 oder 2, dadurch gekennzeichnet, daß eine Rille (8a, 9a; 108a, 109a) in den Zähnen der ersten und zweiten kreisförmigen Ringe eine Vertiefung um die Außenseite der Lagerkugeln definiert, wobei die Rille eine Breite hat, die kleiner als die des äußeren Rings (6b) des Lagers ist.

4. Untersetzungsgetriebe nach Anspruch 1, dadurch gekennzeichnet, daß eine ringförmige Vertiefung (208a, 209a) um die Außenseite der Lagerkugeln durch die ersten und zweiten kreisförmigen Ringe (208, 209) definiert ist, die eine sich verengende Form hat derart, daß der Durchmesser des Teilungskreises eines jeden kreisförmigen Ringes in Richtung auf den anderen kreisförmigen Ring zunimmt.

**Revendications**

1. Engrenage réducteur comprenant une première couronne cannelée circulaire (8; 108; 208) comportant des dents internes disposées sur un cercle primitif parfaitement circulaire, une seconde couronne cannelée circulaire (9; 109; 209) disposée coaxialement à la première, tout près de celle-ci, et comportant aussi des dents internes disposées sur un cercle primitif parfaitement circulaire, les nombres de dents de la première et de la seconde couronne cannelée différant d'un nombre pair, une couronne cannelée flexible (7) comportant des dents externes qui engrènent partiellement les dents internes de chacune des première et seconde couronnes cannelées circulaires en des endroits disposés symétriquement par rapport à l'axe central de rotation, la couronne cannelée flexible étant déformable dans le sens radial, un générateur d'ondes (5) de section en substance elliptique disposé à l'intérieur de la couronne cannelée flexible coaxialement à la première et à la seconde couronne cannelée circulaire, le générateur d'ondes pouvant tourner par rapport à la première et à la seconde couronne cannelée circulaire, et un roulement (6) comportant une bague intérieure (6a), une bague extérieure (6b) et des billes (6c) reçues entre les bagues, le roulement étant intercalé entre la circonférence intérieure de la couronne cannelée flexible (7) et la circonférence extérieure du générateur d'ondes (5) et étant déformable dans le sens radial, caractérisé en ce qu'un évidement annulaire (5a, 5b) est défini autour de l'intérieur des billes de roulement (6c) par la surface du générateur d'ondes (5) en contact avec la bague intérieure (6a) du roulement (6) et/ou un évidement annulaire (8a, 9a; 108a, 109a; 208a, 209a) est/sont défini(s) autour de l'extérieur des billes (6c, 106c) du roulement par les dents de la première et de la seconde couronne cannelée circulaire (8, 9; 108, 109; 208, 209).

2. Engrenage réducteur suivant la revendication 1, caractérisé en ce que la surface du générateur d'ondes (5) présente une gorge (5a, 5b) définissant un évidement annulaire, la gorge ayant une largeur inférieure à la largeur de la bague intérieure (6a) du roulement.

3. Engrenage réducteur suivant la revendication 1 ou 2, caractérisé en ce qu'une gorge (8a, 9a; 108a, 109a) dans les dents de la première et de la seconde couronne cannelée circulaire définit un évidement autour de l'extérieur des billes du roulement, la gorge ayant une largeur inférieure à celle de la bague extérieure (6b) du roulement.

4. Engrenage réducteur suivant la revendication 1, caractérisé en ce qu'un évidement annulaire (208a, 209a) est défini autour de l'extérieur des billes de roulement par la première et la seconde couronne cannelée circulaire (208, 209) qui présentent une forme tronconique telle que le diamètre du cercle primitif de chaque couronne cannelée circulaire aille en augmentant en direction de l'autre couronne cannelée circulaire.

Fig. 1

Fig. 2

1

Fig. 3

Fig. 4

Fig. 5

Fig. 6

108
109
108a
109a
106c

Fig. 7

208
209
208a
209a
207